# FASCICULE DE BREVET EUROPEEN

(11) **EP 0 518 738 B1**
(45) Date de publication et mention de la délivrance du brevet: **28.08.1996**
(21) Numéro de dépôt: 92401542.3
(22) Date de dépôt: 04.06.1992
(51) Int. Cl.: G02B 6/44

(54) **Procédé de réalisation d'un câble à fibres optiques sous tubes et câble résultant**
Herstellungsverfahren für ein optisches Kabel aus Hohladern und daraus resultierendes Kabel
Method of realizing a loose tube fibre cable and resulting cable

(30) Priorité: 13.06.1991 FR 9107227
(43) Date de publication de la demande: 16.12.1992
(73) Titulaire: ALCATEL CABLE, F-92111 Clichy Cédex (FR)
(72) Inventeur: Bonicel, Jean-Pierre, F-69005 Lyon (FR); Gaillard, Pierre, F-69006 Lyon (FR)
(74) Mandataire: Buffiere, Michelle

(56) Documents cités:
- EP-A- 0 084 388
- EP-A- 0 113 377
- EP-A- 0 158 730
- DE-A- 2 709 106
- US-A- 4 153 332

## Description

La présente invention est relative aux câbles comportant des fibres optiques, ces câbles étant des câbles optiques de télécommunication ou des câbles électriques coaxiaux ou de ligne aérienne de transport de l'énergie électrique, à fibres optiques intégrées dans leur structure électrique. Elle porte plus particulièrement sur un procédé de réalisation d'un câble à fibres optiques sous tubes, présentant un grand degré de liberté en traction, et sur le câble résultant de la mise en oeuvre de ce procédé.

De manière connue, les fibres optiques présentent un certain degré de liberté dans la structure ou âme optique qui les porte et les protège, de manière à ne pas être sollicitées quand le câble est soumis à des contraintes de traction ou de contraction. Ceci est obtenu en disposant les fibres libres dans les rainures d'un jonc rainuré ou sous tubes.

Dans le cas du jonc rainuré, à porteur central éventuellement associé au jonc, ce degré de liberté est donné par la dépose des fibres optiques dans les rainures alors que le jonc, le cas échéant sur le porteur central, est en élongation, d'une valeur donnée.

Dans le cas d'une âme optique à fibres optiques sous tubes et à éléments porteurs et de renfort mécanique associés aux tubes, ce degré de liberté est donné par le jeu radial que présentent les fibres dans les tubes et le jeu possible des tubes dans la configuration géométrique donnée à l'âme optique. Le jeu radial des fibres dans les tubes est obtenu notamment par étirage de chaque tube recevant la ou les fibres, conduisant à une surlongueur de fibres dans les tubes. Cette surlongueur reste limitée. Elle est de l'ordre de 1 pour 1000 relativement au tube, mais guère davantage. Le jeu possible des tubes dans la configuration géométrique donnée à l'âme est permis en adoptant une disposition hélicoïdale des tubes, seuls ou avec des éléments de renfort, autour d'un porteur central. Le degré de liberté résultant des fibres est donc donné par le diamètre intérieur et le diamètre extérieur des tubes, le diamètre de l'âme et le pas d'assemblage des tubes. Il est difficile à contrôler et reste de toute manière relativement faible, pour une âme optique de section souhaitée faible.

Le document US-A-4 153332 divulgue un câble à fibres optiques, dont les fibres sont libres et en surlongueur dans des tubes en plastique et les tubes sont enroulés hélicoïdalement autour d'un porteur central et recouverts d'une gaine de protection du câble. La surlongueur des fibres dans les tubes est obtenue par étirage puis relâchement de l'étirage en deux zones successives d'une ligne d'extrusion des tubes autour des fibres.

Le document EP-A-0084388 divulgue un autre câble à fibres optiques, dont les fibres sont recouvertes d'un revêtement secondaire relativement épais en résine, sont enroulées hélicoïdalement autour d'un porteur central et reliées élastiquement au porteur par une couche d'adhésif et sont serrées radialement sur le porteur par un ruban, qui les entoure et est lui-même recouvert d'une gaine de protection.

La présente invention a pour but de réaliser une âme optique à fibres optiques sous tubes présentant un degré de liberté des fibres contrôlé et supérieur à celui obtenu jusqu'à présent.

Elle porte sur un procédé de réalisation d'un câble à fibres optiques disposées libres à l'intérieur de tubes, ledit câble étant à âme ou partie optique formée par lesdits tubes à fibres optiques et par au moins un élément porteur et de renfort mécanique associé, ledit procédé consistant à réaliser la dépose desdites fibres dans lesdits tubes mis simultanément sous élongation, la suppression subséquente de ladite élongation entraînant une mise en surlongueur des fibres optiques dans lesdits tubes, et à assembler ensuite selon une configuration géométrique définie le ou les éléments porteurs et de renfort mécanique et lesdits tubes contenant lesdites fibres en surlongueur, caractérisé en ce que ledit assemblage est réalisé avec chaque élément porteur et de renfort mécanique mis sous élongation d'une valeur définie et en ce que ledit assemblage consiste en outre à bloquer longitudinalement ensemble lesdits tubes contenant lesdites fibres en surlongueur et le ou les éléments porteurs et de renfort mécanique maintenus sous élongation et à relâcher ensuite la tension de mise sous élongation exercée sur chaque élément porteur et de renfort mécanique, de sorte que lesdits tubes bloqués longitudinalement sur le ou les éléments porteurs et de renfort mécanique se trouvent comprimés longitudinalement, entraînant ainsi un accroissement de la surlongueur des fibres optiques dans ces tubes ainsi comprimés.

Ce procédé présente en outre au moins l'une ou l'autre des caractéristiques suivantes :
- le blocage est assuré par collage;
- le blocage est assuré par dépôt d'un revêtement de coefficient de frottement élevé sur le ou les éléments porteurs et de renfort mécanique et/ou sur les tubes;
- on réalise un serrage des tubes et du ou des éléments porteurs et de renfort mécanique avant de relâcher la tension d'élongation exercée sur ce ou ces éléments.

L'invention porte également sur un câble à fibres optiques libres sous tubes, résultant de la mise en oeuvre de ce procédé, dans lequel lesdits tubes sont enroulés hélicoïdalement sur la périphérie d'un porteur central constituant le ou les éléments porteurs et de renfort mécanique et sont bloqués longitudinalement et serrés radialement sur ledit porteur, caractérisé en ce que lesdits tubes sont en outre contractés longitudinalement relativement audit porteur central en l'absence de contrainte exercée sur ledit câble.

Les caractéristiques et les avantages de la présente invention ressortiront de la description donnée ci-après en regard du dessin ci-annexé. Dans ce dessin :
- la figure 1 illustre schématiquement une installation de mise en oeuvre du procédé selon l'invention,
- la figure 2 illustre schématiquement en section la partie optique d'un câble, réalisée selon la présente invention.

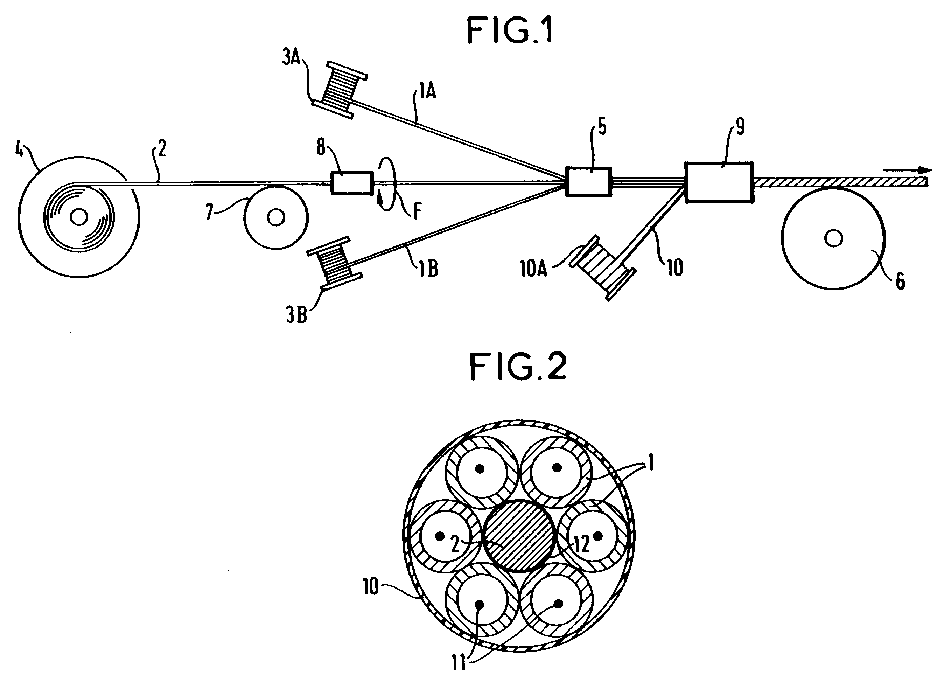

L'installation schématisée dans cette figure 1 assure l'assemblage de tubes tels que 1A, 1B, contenant chacun une ou plusieurs fibres optiques, sur un porteur central 2. Les fibres, non visibles, sont initialement disposées de manière connue avec jeu dans les tubes. Ces tubes avec leurs fibres sont montrés stockés sur des bobines telles que 3A, 3B. Ils peuvent tout aussi bien provenir directement de lignes de confection et de mise sous tube de fibres. L'élément porteur central 2 est dans cet exemple une corde de résistance élevée, en particulier à la traction, d'allongement limité mais non totalement négligeable. Il est montré stocké sur un dévidoir 4.

Les tubes 1A, 1B sont enroulés hélicoïdalement en S ou en SZ autour du porteur central 2, dans un poste de commettage 5, disposé sur le chemin de prélèvement du porteur central du dévidoir 4, en donnant une configuration géométrique souhaitée à l'assemblage des tubes autour du porteur.

Pour cet assemblage, selon la présente invention, le porteur central 2 est mis sous élongation contrôlée obtenue par un organe commandé de traction 6, monté en aval du poste 5, recevant l'âme optique résultant de l'assemblage des tubes sur le porteur central, et par un frein 7, en amont du poste de commettage 5, sur le chemin du porteur central seul. Le porteur central, soumis à cette tension mécanique contrôlée entre l'organe de traction et le frein, est ainsi entre eux sous élongation de valeur définie. Cet allongement du porteur est de l'ordre de 1 % ou légèrement inférieur.

Le porteur central est mis de manière connue en rotation sur lui même avec son avance dans le poste de commettage, ainsi que schématisé par le flèche F.

Un poste 8 d'enduction du porteur central de colle ou d'un autre produit convenable d'adhérence assure, entre le frein 7 et le poste de commettage 5, le dépôt de ce produit d'adhérence sur la périphérie du porteur sous tension. Ce produit d'adhérence est une colle ou une résine de collage fondue à chaud ou une matière de revêtement à coefficient de frottement élevé pour les tubes à assembler, telle que par exemple un polyuréthane, assurant le blocage longitudinal souhaité des tubes.

En variante ce dépôt de colle ou ce revêtement peut être réalisé sur les tubes individuels ou sur les tubes et le porteur.

Dans le poste de commettage 5, les tubes 1A, 1B enroulés hélicoïdalement sur le porteur sont ainsi simultanément bloqués longitudinalement sur le porteur. Un serrage des tubes sur le porteur, toujours sous tension, est assuré dans un poste dit de rubanage 9 pour le maintien en position des tubes bloqués longitudinalement sur le porteur. Ce poste 9 reçoit un ruban 10 prelevé d'une bobine 10A, qui est enroulé hélicoïdalement, avec serrage et recouvrement de ses bords, sur les tubes

Au relâchement de la tension sur le porteur central, en aval de l'organe de traction 6, les tubes bloqués longitudinalement et serrés sur le porteur se trouvent alors comprimés longitudinalement sur ce dernier rendu libre. Le degré de liberté de leurs fibres est augmenté en conséquence. Il permet au câble comportant cette âme optique selon la présente invention de supporter des efforts de traction plus importants que ceux tolérés sur un câble comportant une âme optique selon l'art connu, du fait de son élongation supplémentaire possible par rapport à ce dernier, de la valeur définie de l'élongation du porteur lors de l'assemblage et du blocage longitudinal des tubes sur lui.

Bien entendu le mode de serrage des tubes sur le porteur peut être réalisé différemment, en particulier par une tresse métallique ou un autre revêtement convenable de serrage des tubes pour leur contraction longitudinale relativement au porteur relâché sur lequel ils sont bloqués.

Bien entendu, également, les tubes 1A, 1B peuvent être enroulés seuls ou associés à des fils de renfort mécanique et/ou de bourrage, de même section qu'eux, sur le porteur.

Les enroulements hélicoïdaux sont réalisés de manière jointive ou non.

La figure 2 illustre en section cette âme optique réalisée selon l'invention, pouvant constituer l'âme centrale d'un câble optique ou la partie optique d'un câble électrique, en particulier d'un câble de garde d'une ligne d'énergie ou d'un câble électrique coaxial, à porteur central formant le conducteur axial éventuellement recouvert d'isolant.

Dans cette figure 2, on a désigné sous la même référence 1 les tubes enroulés hélicoïdalement et montrés jointifs sur le porteur central 2. On a représenté en 11 une seule fibre optique libre dans chaque tube. Les tubes sont bloqués longitudinalement sur le porteur, en étant en contraction le long du porteur, par une couche de produit d'adhérence 12.

Ces tubes sont serrés sur le porteur par le ruban 10.

Dans cette figure 2, on a montré les fibres 11 non pas centrées dans les tubes, mais décalées légèrement dans les tubes, vers la périphérie de l'âme optique, en l'absence de contrainte exercée sur le câble.

Ce décalage initial vers la périphérie de l'âme traduit le degré supplémentaire de liberté donné aux fibres pour des conditions alors rendues moins strictes en traction d'utilisation du câble les comportant. Il traduit également que ce degré de liberté est favorisé pour les efforts en traction du câble, qui sont plus fréquents et plus importants que les efforts en contraction, dans les conditions habituelles d'utilisation des câbles.

## Revendications

1. Procédé de réalisation d'un câble à fibres optiques disposées libres à l'intérieur de tubes, ledit câble étant à âme ou partie optique formée par lesdits tubes à fibres optiques et par au moins un élément porteur et de renfort mécanique associé, ledit procédé consistant à réaliser la dépose desdites fibres dans lesdits tubes mis simultanément sous élongation, la suppression subséquente de ladite élongation entraînant une mise en surlongueur des fibres optiques dans lesdits tubes, et à assembler ensuite selon une configuration géométrique définie le ou les éléments porteurs et de renfort mécanique et lesdits tubes contenant lesdites fibres en surlongueur, caractérisé en ce que ledit assemblage est réalisé avec chaque élément porteur et de renfort mécanique mis sous élongation d'une valeur définie et en ce que ledit assemblage consiste en outre à bloquer longitudinalement ensemble lesdits tubes contenant lesdites fibres en surlongueur et le ou les éléments porteurs et de renfort mécanique maintenus sous élongation, et à relâcher ensuite la tension de mise sous élongation exercée sur chaque élément porteur et de renfort mécanique, de sorte que lesdits tubes bloqués longitudinalement sur le ou les éléments porteurs et de renfort mécanique se trouvent comprimés longitudinalement, entraînant ainsi un accroissement de la surlongueur des fibres optiques dans ces tubes ainsi comprimés.

2. Procédé selon la revendication 1, caractérisé en ce qu'il consiste à bloquer longitudinalement ensemble lesdits tubes et le ou les éléments porteurs et de renfort mécanique par collage lors de leur assemblage.

3. Procédé selon la revendication 2, caractérisé en ce que ledit collage est obtenu par enduction de colle de chaque élément porteur et de renfort mécanique et/ou des tubes individuels, préalablement audit assemblage.

4. Procédé selon la revendication 1, caractérisé en ce qu'il consiste à bloquer longitudinalement ensemble lesdits tubes et le ou les éléments porteurs et de renfort mécanique par dépôt d'une matière de revêtement de coefficient de frottement élevé sur le ou les éléments et/ou sur chacun desdits tubes, préalablement audit assemblage.

5. Procédé selon l'une des revendications 1 à 4, caractérisé en ce qu'il consiste en outre à réaliser un serrage desdits tubes et du ou des éléments porteurs et de renfort mécanique assemblés et bloqués longitudinalement ensemble, avant de relâcher la tension de mise sous élongation exercée sur chaque élément porteur et de renfort mécanique.

6. Câble à fibres optiques libres sous tubes, résultant de la mise en oeuvre du procédé selon l'une des revendications 1 à 5 et dans lequel lesdits tubes sont enroulés hélicoïdalement sur la périphérie d'un porteur central constituant le ou les éléments porteurs et de renfort mécanique et sont bloqués longitudinalement et serrés radialement sur ledit porteur, caractérisé en ce que lesdits tubes sont en outre contractés longitudinalement relativement audit porteur central en l'absence de contrainte exercée sur ledit câble.

## Patentansprüche

1. Verfahren zur Herstellung eines Kabels mit Lichtleitfasern, die lose innerhalb von Röhren verlegt sind, wobei das Kabel eine Seele oder einen optischen Teil enthält, der von den Röhren mit den Lichtleitfasern und mindestens einem zugeordneten Träger- und mechanischen Verstärkungselement gebildet wird, wobei das Verfahren darin besteht, die Fasern in die zugleich gestreckten Röhren einzubringen, wobei der anschließende Wegfall dieser Streckung eine Überlänge der Lichtleitfasern in den Röhren bewirkt, und anschließend gemäß einer bestimmten geometrischen Konfiguration das mindestens eine Träger- und mechanische Verstärkungselement und die die Fasern in Überlänge enthaltenden Röhren zusammenzubauen, dadurch gekennzeichnet, daß der Zusammenbau bei um einen bestimmten Wert gestrecktem Träger- und mechanischen Verstärkungselement erfolgt und daß der Zusammenbau weiter darin besteht, die die Fasern in Überlänge enthaltenden Röhren und das mindestens eine gestreckte Träger- und mechanische Verstärkungselement in Längsrichtung aneinander zu befestigen und anschließend die auf jedes Träger- und mechanische Verstärkungselement ausgeübte Streckungskraft aufzuheben, so daß die in Längsrichtung auf dem mindestens einen Träger- und mechanischen Verstärkungselement befestigten Röhren in Längsrichtung komprimiert werden, wodurch die Überlänge der Lichtleitfasern in den so komprimierten Röhren zunimmt.

2. Verfahren nach Anspruch 1, dadurch gekennzeichnet, daß es darin besteht, die Gesamtheit der Röhren und das mindestens eine Träger- und mechanische Verstärkungselement bei ihrem Zusammenbau durch Kleben in Längsrichtung aneinander zu befestigen.

3. Verfahren nach Anspruch 2, dadurch gekennzeichnet, daß die Befestigung durch Aufbringen eines Klebers auf jedes Träger- und mechanische Verstärkungselement und/oder auf die einzelnen Röhren vor dem Zusammenbau erfolgt.

4. Verfahren nach Anspruch 1, dadurch gekennzeichnet, daß es darin besteht, die Gesamtheit der Röhren und das mindestens eine Träger- und mechanische Verstärkungselement durch Aufbringen einer Schicht mit einem hohen Reibungskoeffizienten auf das mindestens eine Träger- und mechanische Verstärkungselement und/oder die Röhren vor dem Zusammenbau in Längsrichtung aneinander zu befestigen.

5. Verfahren nach einem der Ansprüche 1 bis 4, dadurch gekennzeichnet, daß es außerdem darin besteht, ein die Röhren und das mindestens eine Träger- und mechanische Verstärkungselement, die zusammengebaut und in Längsrichtung aneinander befestigt sind, zusammenzupressen, bevor der auf jedes Träger- und mechanische Verstärkungselement ausgeübte Zug aufgehoben wird.

6. Kabel mit in Röhren lose verlegten Lichtleitfasern, das aus der Anwendung des Verfahrens nach einem der Ansprüche 1 bis 5 entsteht und bei dem die Röhren schraubenförmig um einen zentralen Träger aufgewickelt sind, der das mindestens eine Träger- und Verstärkungselement bildet, und in Längsrichtung auf dem Träger befestigt und radial angepreßt sind, dadurch gekennzeichnet, daß die Röhren außerdem in Längsrichtung gegenüber dem zentralen Träger kontraktiert sind, wenn auf das Kabel keine Kraft einwirkt.

## Claims

1. A method of making a cable including optical fibers disposed loosely inside tubes, said cable having an optical portion or core assembly formed by said tubes containing optical fibers and by at least one associated support and mechanical reinforcement member, said method consisting in depositing said fibers into said tubes while the tubes are simultaneously subjected to elongation, in subsequently relaxing the elongation so that the optical fibers have surplus length inside said tubes, and in then assembling together in a defined geometrical configuration the support and mechanical reinforcement member(s) and said tubes containing said fibers having surplus length, said method being characterized in that said assembling together is performed with each support and mechanical reinforcement member being subjected to elongation of a defined value, and in that said assembling together further consists in longitudinally locking together said tubes containing said optical fibers having surplus length, and the support and mechanical reinforcement member(s) maintained under elongation, and in then relaxing the elongation tension exerted on each support and mechanical reinforcement member, so that said tubes as longitudinally locked on the support and mechanical reinforcement member(s) find themselves compressed longitudinally, thereby leading to an increase in the surplus length of the optical fibers inside the tubes as compressed.

2. A method according to claim 1, characterized in that it consists in longitudinally locking together said tubes and the support and mechanical reinforcement members by gluing them together while they are being assembled together.

3. A method according to claim 2, characterized in that said gluing is obtained by coating with glue each support and mechanical reinforcement member and/or the individual tubes prior to said assembling together.

4. A method according to claim 1, characterized in that it consists in longitudinally locking together said tubes and the support and mechanical reinforcement member(s) by depositing a covering material having a high coefficient of friction on the member(s) and on each of said tubes prior to said assembling together.

5. A method according to any one of claims 1 to 4, characterized in that it further consists in clamping said tubes and the support and mechanical reinforcement members as assembled and locked longitudinally together, prior to relaxing the elongation tension exerted on each support and mechanical reinforcement member.

6. A cable having optical fibers disposed loosely inside tubes, the cable resulting from implementing the method according to any one of claims 1 to 5, and in which cable, said tubes are wound helically on the periphery of a central support member constituting the support and mechanical reinforcement member(s), and they are locked longitudinally and clamped radially on said support member, said cable being characterized in that said tubes are further contracted longitudinally relative to said central support member when no stress is exerted on said cable.
